# EUROPEAN PATENT APPLICATION

(11) **EP 2 451 087 A1**
(43) Date of publication of application: **09.05.2012**
(21) Application number: 11275136.7
(22) Date of filing: 02.11.2011
(51) Int. Cl.: H04B 7/06

(54) **Method and network entity for active set update in wide area mobile networks**

(30) Priority: 03.11.2010 ES 201031616
(71) Applicant: Vodafone Group PLC, Newbury Berkshire RG14 2FN (GB); Vodafone España, S.A.U., 28108 Alcobendas (ES)
(72) Inventor: Tenorio Sanz, Santiago, E-28050 Madrid (ES); Exadaktylos, Kyriakos, E-28050 Madrid (ES); Urbano Ruiz, Julio, E-28050 Madrid (ES); Serrano Solsana, Clara, E-28050 Madrid (ES); García Viñas, Aitor, E-28050 Madrid (ES); Le Pezennec, Yannick, E-28050 Madrid (ES); McWilliams, Brendan, E-28050 Madrid (ES); López Roman, Javier, E-28050 Madrid (ES); Dominguez Romero, Francisco, E-28050 Madrid (ES); Alcazar Viguera, Esperanza, 28050 Madrid (ES); De Pasquale, Andrea, E-28050 Madrid (ES); Diaz Mateos, Maria, 28050 Madrid (ES); Garriga Muñiz, Beatriz, E-28050 Madrid (ES)
(74) Representative: Keston, David Arthur

(57) **Abstract**

The described method provides a Network Controller (e.g., RNC) with an active set update procedure for application when activating STTD in the 3G networks. To avoid any call drop due to misalignments between the respective transmission diversity mode configurations of cells and the presence/absence of support for transmission diversity in user terminals, STTD mode is deactivated, in cases where the terminal is rejecting the Active Set Update message due to 'invalid configuration'. The misalignments between the respective transmission diversity mode configurations may arise in a number of scenarios: handover from a cell with STTD deactivated to a cell with STTD activated, handover from a cell with STTD activated to a cell with STTD deactivated, or handover between cells with STTD activated. In all cases the solution consists of indicating to the UE the STTD Off configuration to obtain a success active set update procedure irrespective of the true configuration status.

## Description

### TECHNICAL FIELD OF THE INVENTION

The present invention has its application within the telecommunications sector and, especially, in the industrial area engaged in providing Radio Network Controllers (RNCs) with Mobility Management means for handling different configurations of legacy User Equipments (UEs) in Radio Access Networks (RANs) with or without Space Time Transmit Diversity (STTD). More specifically, it relates to RANs of wireless communications systems supporting HSPA (High Speed Packet Access) and MIMO (Multiple Input Multiple Output).

### BACKGROUND OF THE INVENTION

Transmission diversity based on Space Time Transmit Diversity (STTD), is a standard feature of cellular telecommunications and already appears on radio network vendor roadmaps. STTD which uses space-time block code (STBC) in order to exploit redundancy in multiple transmitted versions of a signal that is, the two antennas transmit the same information but each one uses a different coding scheme. A transmit diversity mode was introduced by the 3rd Generation Partnership Project (3GPP) and specifying STTD for Wideband Code Division Multiple Access (WCDMA) in 3GPP Release 99 (R99). Release 7 of the 3GPP specification expanded the STTD approach to Evolved High-Speed Packet Access (HSPA+). Indeed, the utilization of STTD has been chosen by 3GPP as the main Diversity Technique to be used together with MIMO (Multiple Input Multiple Output).

Legacy devices (non-MIMO HSPA terminals) support STTD feature since it has been mandatory in the baseline 3GPP specification since the initial Release 99 (non-MIMO). However, the lack of interest from mobile telecommunications network operators in the use of the STTD feature for its intended purpose has leaded to face several mobility and interoperability issues. Indeed STTD feature testing has not been considered as part of the testing baseline for Interoperability Testing purposes, especially on the mobility side. This has led to a delayed introduction of STTD in the current commercial networks.

With the renewed interest in STTD, the telecommunications network operators have started to perform Interoperability Testing in their deployed networks, they have found incompatibilities when trying to configure STTD in some radio cells.

The cells with which a User Equipment (UE) communicates form the active set of that UE. In the R99 case at least, a Radio Network Controller (RNC), for example, directs the downlink data heading to a certain user to every cell in the active set (HSDPA user plane data is transferred to the reference best cell only). Correspondingly, the UE listens to the downlink transmissions of all the cells in the active set. When the user changes its location or the qualities of the downlink radio transmissions of the neighbouring cells change for some other reason, it may be necessary to modify the active set. The set of cells whose signals are used during a soft handover is also referred to as the active set.

The following table shows the specific information fields of the ACTIVE SET UPDATE message specified by 3GPP (see 3GPP TS 25.331 V6.2.0, Release 6), which are relevant for the context of the invention. The field Radio Link Addition Information contains the cell identifier to be added to the active set, i.e., to the cells which will have a connection with the UE after the ACTIVE SET UPDATE message is received and accepted by said UE.

**Table 1: Structure of the ACTIVE SET UPDATE message**

| **Information Element/Group name** | **Type and reference** | **Semantics description** | **Version** |
|---|---|---|---|
| Message Type | Message Type | | |

| **UE information elements** | | | |
|---|---|---|---|
| RRC transaction identifier | RRC transaction identifier 10.3.3.36 | | |
| Integrity check info | Integrity check info 10.3.3.16 | | |
| Activation time | Activation time 10.3.3.1 | Default value is "now". | |
| New U-RNTI | U-RNTI 10.3.3.47 | | |
| New H-RNTI | H-RNTI 10.3.3.14a | | REL-6 |
| New Primary E-RNTI | E-RNTI 10.3.3.10a | | REL-6 |
| New Secondary E-RNTI | E-RNTI 10.3.3.10a | | REL-6 |

| **CN information elements** | | | |
|---|---|---|---|
| CN Information info | CN Information info 10.3.1.3 | | |

| **Phy CH information elements** | | | |
|---|---|---|---|
| DTX-DRX timing information | DTX-DRX timing information 10.3.6.34b | | REL-7 |
| DTX-DRX Information | DTX-DRX Information 10.3.6.34a | | REL-7 |
| HS-SCCH less Information | HS-SCCH less Information 10.3.6.36ab | | REL-7 |
| MIMO parameters | MIMO parameters 10.3.6.41a | | REL-7 |

| **Uplink radio resources** | | | |
|---|---|---|---|
| Maximum allowed UL TX power | Maximum allowed UL TX power 10.3.6.39 | Default value is the existing "maximum UL TX power. | |
| Uplink secondary cell info FDD | Uplink secondary cell info FDD 10.3.6.115 | FDD only | REL-9 |
| E-DCH reconfiguration information on secondary UL frequency | E-DCH reconfiguration information on secondary UL frequency 10.3.6.121 | FDD only | REL-9 |

| **Downlink radio resources** | | | |
|---|---|---|---|
| Radio link addition information | | Radio link addition information required for each RL to add | |
| >Radio link addition information | Radio link addition information 10.3.6.68 | | |
| >Target cell preconfiguration information | Target cell preconfiguration information 10.3.6.79a | | REL-8 |
| Radio link addition information on secondary UL frequency | Radio link addition information on secondary UL frequency 10.3.6.119 | FDD only | REL-9 |
| Serving Cell Change Parameters | Serving Cell Change Parameters 10.3.6.74b | | REL-8 |
| Radio link removal information | | Radio link removal information required for each RL to remove | |
| >Radio link removal information | Radio link removal information 10.3.6.69 | | |
| Radio link removal information on secondary UL frequency | Radio link removal information on secondary UL frequency 10.3.6.120 | FDD only | REL-9 |
| TX Diversity Mode | TX Diversity Mode 10.3.6.86 | Default value is the TX diversity mode currently used in all or part of the active set. | This can be none, STTD, closed loop mode1 |

| **Information Element/Group name** | **Type and reference** | **Semantics description** | **Version** |
|---|---|---|---|
| DPC Mode | Enumerated (Single TPC, TPC triplet in soft) | "Single TPC" is DPC_Mode= 0 and "TPC triplet in soft" is DPC mode= 1 in [29]. | REL-5 |
| Serving HS-DSCH cell information | Serving HS-DSCH cell information 10.3.6.74a | | REL-6 |
| E-DCH reconfiguration information | E-DCH reconfiguration information 10.3.6.69a | | REL-6 |
| UL 16QAM configuration | UL 16QAM configuration 10.3.6.86o | | REL-7 |
| E-DCH reconfiguration information same serving cell | E-DCH reconfiguration information same serving cell 10.3.6.69b | This IE is not present if the serving E-DCH cell is changed with this message. | REL-7 |
| E-TFC Boost Info | E-TFC Boost Info 10.3.6.106 | Absence of this IE means that boosting of E-DPCCH is disabled | REL-7 |
| E-DPDCH power interpolation | Boolean | TRUE means E-DPDCH power interpolation formula is used, FALSE means E-DPDCH power extrapolation formula is used for the computation of the gain factor β*_{ed}* according to [29] | REL-7 |
| Downlink secondary cell info FDD | Downlink secondary cell info FDD 10.3.6.31 a | FDD only | REL-8 |

In scenarios with a non continuous STTD 3G layer, the active set of cells may include two types of configurations: cells supporting STTD (STTD ON configuration) or cells not using transmit diversity (STTD OFF).

In a normal mobility procedure, when the user starts a call and the UE reports the necessity of adding a cell to the network, the network starts an Active Set Update Procedure of the Radio Resource Control (RRC): an ACTIVE SET UPDATE message from the RRC layer of the RNC is sent and a (positive or negative) reply is sent from the UE. During this procedure, the network indicates the UE whether the cell has STTD configured or not. This is done by means of the "TX Diversity Mode" Information Element valid for the whole active set and the "Closed loop timing adjustment mode" information element specifically defined per Radio Link (this information element is in charge of defining whether the STTD is ON or OFF for each specific cell).

Unfortunately, not all legacy devices can support the adding of a cell with STTD ON when the active set consists only of STTD OFF cells. If this happens, the UE sends an ACTIVE SET UPDATE FAILURE message to the RNC reporting the cause "Invalid Configuration" and the soft or softer (soft refers to the handover with simultaneous connection in different Nodes B or Base Stations, softer is the handover with simultaneous connections to different cells of the same Node B or Base Station) handover procedure fails leading to loss 3G mobility, higher call block and drop rates, and losing 3G coverage.

On the other hand, in the case that the call is established in a cell with STTD ON and a cell with STTD OFF is tried to be added to the active set, the network may also need to fallback its decision because an ACTIVE SET UPDATE FAILURE due to "Invalid Configuration" is received from the UE. Similar situation happens when the cell to be added to the active set supports STTD (both initial and target cells, are configured with STTD ON).

A robust fallback solution is a thus essential to manage the interoperability among (2G, 3G and beyond) wireless communication networks and cope with any unknown mobility issue that may arise among the already existing (legacy) commercial devices and the diverse possible configurations.

### SUMMARY OF THE INVENTION

The present invention serves to solve the aforesaid problem by providing management mobility procedures for updating the active set corresponding to a UE changing between cells with different configurations of STTD transmission diversity mode. A fallback procedure triggered by the RAN network entity which is in communication with the UE and controlling the UE's mobility, is proposed in order to preserve the call in spite of lack of a full STTD feature support on the UE's side of the existing legacy devices.

UEs having differing capabilities (HSDPA UEs, MIMO UEs, and non-MIMO or Rel'99 UEs) can coexist in the wireless communication system and establish (voice, data, multimedia) calls. A UE engaged in a call establishment communicates with cells which can be configured in either of two possible transmission diversity modes: STTD activated (STTD ON) or STTD deactivated (STTD OFF).

In accordance with one aspect of the invention, there is provided a method for updating the active set of cells used by a User Equipment (UE) for wireless communications in a wide area mobile network as claimed in claim 1.

The source cell is the one in which the UE is engaged in a call establishment. The target cell is the one detected by the UE and to be added to the active set when updating. Each cell of the active set is configured in one of two possible modes of transmission diversity: either STTD activated (STTD ON) or STTD deactivated (STTD OFF).

The method comprises the following steps:
- The UE attempts to add the target cell to the active set,
- If the addition of the target cell to the active set fails, the UE sends to a network controller (e.g., a RNC or a HSPA Node B or an eHSPA Node B) a first failure message, which is an ACTIVE SET UPDATE FAILURE message, indicating that the active set update has failed.
- The network controller checks whether the UE supports STTD features and when the network controller determines that said UE does not support STTD features, further steps are taken as follows:
   - the network controller first determines whether the target cell has transmission diversity mode configured with STTD activated or not (STTD deactivated) and also whether the transmission diversity mode configuration of the source cell is STTD ON or OFF, and
   - before adding the target cell to the active set, the transmission diversity mode configuration of both source cell and target cell are (re)configured with STTD deactivated (STTD OFF).

Attempting to add the target cell to the active set involves an event-based Radio Resource Control (RRC) message sent by the UE to the network controller. The event which triggers its sending is a typical measurement report on the active and detected cells, obtained by the UE.

Depending on the transmission diversity mode configuration of the source and target cells which has been determined by the network controller, the reconfiguration of the transmission diversity modes of the two cells in order to set both into STTD deactivated configuration is performed as explained in the following cases:
- If the transmission diversity mode configuration of the source cell is STTD OFF and the target cell has STTD ON, an ACTIVE SET UPDATE message is sent from the network controller to instruct the UE to add the target cell to the active set with STTD deactivated configuration.
- If the transmission diversity mode configuration of the source cell is STTD ON, a PHYSICAL CHANNEL RECONFIGURATION message is sent from the network controller to instruct the UE to change the transmission diversity mode and reconfigure it with STTD OFF.
- When both the source cell and the target cell have STTD activated, an ACTIVE SET UPDATE message is sent (from the network controller) before sending the PHYSICAL CHANNEL RECONFIGURATION message and after a certain time period. This period can be configurable by the mobile network operator and is defined from the time when the first ACTIVE SET UPDATE FAILURE message is received. The ACTIVE SET UPDATE message indicates to the UE the instruction to add the target cell to its active set with the transmission diversity mode configured as STTD deactivated (instead of the initial configuration of the target cell STTD ON reported from the UE). Then, a second ACTIVE SET UPDATE FAILURE message is sent from the UE to the network controller, which prompts the network controller to send the PHYSICAL CHANNEL RECONFIGURATION message for also reconfiguring the source cell to STTD deactivated as explained before.

Optionally, after receiving the first ACTIVE SET UPDATE FAILURE message in the network controller, at least one identifier of the UE can be introduced in a black list during a blocking time period (configurable by the mobile network operator). Thus, the whole method described before can be enhanced by the management of a device "black list" of UEs, in a preferred embodiment of the invention. This black list inform the mobile communication network that updating the active set of the UEs in the list, when implying that said active set involves at least one cell (the source cell and/or the target cell) with STTD ON, is blocked during the configurable blocking time period. Therefore, the black list prevents to receive a second ACTIVE SET UPDATE FAILURE from any of the listed UE, which are already set into the right configuration to send an ACTIVE SET UPDATE ACCEPT. Whenever a device is identified as having interoperability issues with STTD, any of the UE's identifiers in the mobile radio (e.g., IMSI, TMSI, P-TMSI or IMEI) can be inserted into the black list (managed by the corresponding network entity of the core network, for example: HSS, EIR) for further investigation. In addition, the network avoids any attempt of mobility configurations which are likely to end up on known failures during a timer (here called blocking time period and predefined on the network side). After the expiration of this timer, the device is treated as "clean" (out of the "black list") and treated as a normal full working STTD device. By this mean, the next soft or softer handover failures can be avoided during the length of the timer, if the active set size is again one afterwards.

In accordance with a further aspect of the invention, there is provided a telecommunications network entity as claimed in claim 8.

The network entity may preferably be implemented in a radio network controller (RNC), comprising processing means for performing the method described before, also it can be implemented in the HSPA Node B and if the RAN is based on a flat architecture (Collapsed Architecture) for the packet switching (PS) domain and no RNC nodes are required in the network, the proposed network entity can be a flat HSPA Node B (named evolved HSPA Node B or eHSPA Node B).

In accordance with another aspect of the invention, there is provided a computer program comprising program code means which executes the method described before, when loaded into processing means of the network controller defined above.

Without implementing in the possible network scenarios defined above a fallback mechanism as proposed, customer perception is lower voice quality, lower data throughput and less 3G coverage.

If the network is not provided with these proposed fallback mechanisms, then the customer satisfaction will be reduced, due to a highly limited mobility on the 3G side and due to a higher call block and drop rate which decrease performance.

A major advantage of the described solution is improvement in customer satisfaction and network performance thanks to avoidance of impact from mobility issues with STTD transmission diversity mode activation on legacy devices.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:

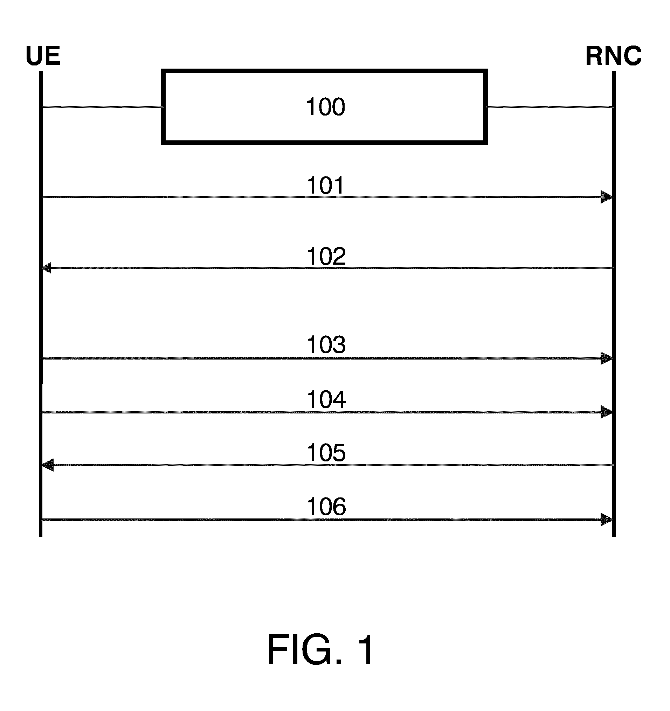

Figure 1. - Shows a message diagram of an active set update procedure in the case that, having a call established in a source cell which has STTD transmission diversity deactivated, a target cell with STTD transmission diversity activated is to be added to the active set, according to a possible embodiment of the invention.

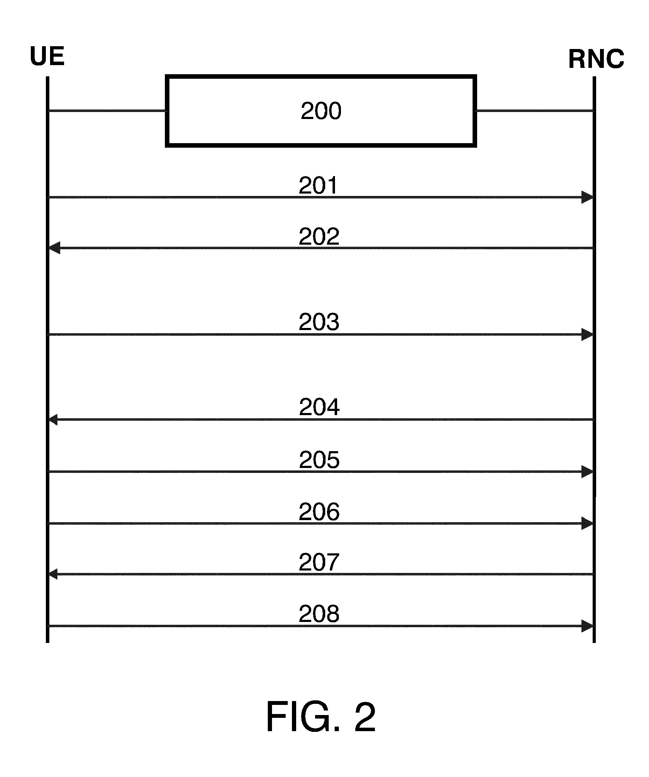

Figure 2. - Shows a message diagram of an active set update procedure in the case that, having a call established in a source cell which has STTD transmission diversity activated, a target cell with STTD transmission diversity deactivated is to be added to the active set, according to another possible embodiment of the invention.

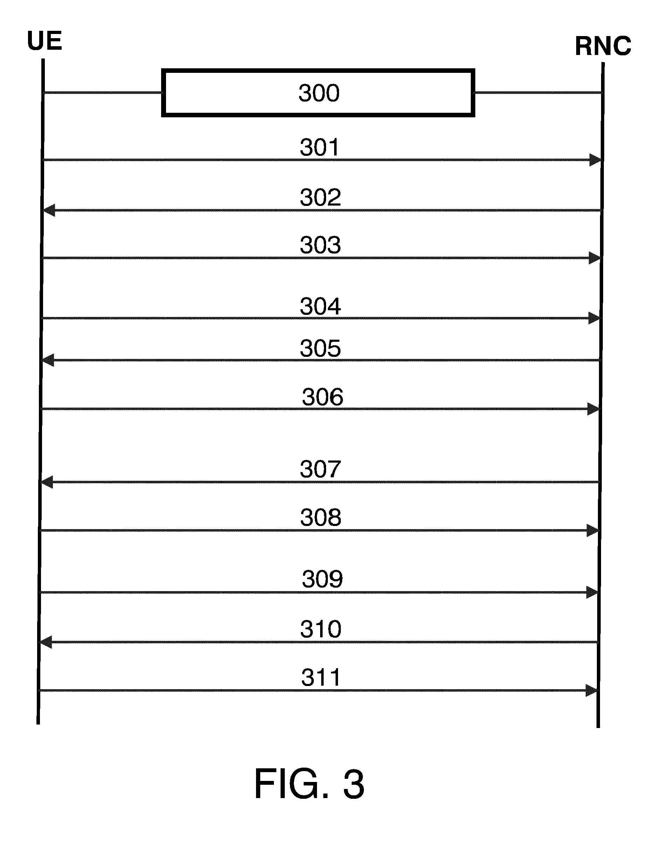

Figure 3. - Shows a message diagram of an active set update procedure in the case that, having a call established in a source cell which has STTD transmission diversity activated, a target cell where STTD transmission diversity is also activated is to be added to the active set, according to a further possible embodiment of the invention.

### DETAILED DESCRIPTION OF THE INVENTION

Many UEs (typically legacy devices) lack full STTD feature support. Consider a network scenario where such a user equipment UE communicates with a radio network controller RNC engaged in a call establishment 100 with transmit diversity mode deactivated, i.e. the UE is in a source cell with STTD OFF. If this UE tries to add a target cell with STTD activated, i.e. STTD ON, the updating of the active set of cells is executed according to the message flow shown in Figure 1. First, the UE sends a first message 101 to the RNC, which is generated by the RRC layer and event-based, to report that the new (target) cell has been detected and is to be included in the active set. Specifically the first message 101 may be a 1A, 1C or 1 D event measurement report from the UTRAN Intra Frequency Measurement Events classification from 1A to 1I: for a detailed discussion of this classification scheme see 3GPP TS 25.331: "RRC Protocol Specification".

Having been notified about the new cell, the RNC sends an ACTIVE SET UPDATE message 102 to the UE in order to add the new (target) cell into the active set of the UE. Since the target cell has STTD activated and the existing UE cannot support it (the network is capable of tracking a list of unsupportive UEs, so that certain UE types can be associated with an operating mode in which STTD activation is unsupported), then the UE sends an ACTIVE SET UPDATE FAILURE message 103 notifying "Invalid Configuration" failure cause to the RNC. Note that there are other possible causes for triggering an ACTIVE SET UPDATE FAILURE, e.g. "physical channel failure" which means that there is a synchronisation failure, and in such cases there is no need to change) STTD configuration

After a time period (e.g. in a pre-defined time interval, say 500ms to 1 second, provided to UE by the RNC), the UE further sends a second event-based message 104 in order to report one more time to the RNC that the detected target cell is to be added into the active set of the UE. Upon receipt of the second message 104, the RNC replies to the UE with another ACTIVE SET UPDATE message 105 indicating that the new cell is configured as STTD OFF and is to be added by the UE into its active set. Thus, even though the new (target) cell has STTD activated, the RNC indicates that the target cell configuration is STTD OFF to keep the call going on. As the existing UE supports this active set update (replacing the source cell, which already had STTD OFF configuration, by the target cell labelled by the RNC as STTD OFF), the UE normally sends an ACTIVE SET UPDATE ACCEPT message 106 and the procedure is completed. Thus, the UE adds the new target cell to the active set treating that cell as having an STTD OFF configuration; therefore, one of the transmission diversity branches is lost but the call is not dropped or moved to 2G and is maintained as a 3G call.

Contrast Figure 1 with the reverse situation in Figure 2. Figure 2 shows the active set update procedure in network scenarios wherein a call 200 is established in a (source) cell with STTD ON and the UE involved in said call with transmit diversity mode activated tries to add a cell with transmit diversity mode deactivated, i.e. the target cell is STTD OFF. First, the RNC is informed through a first message 201 sent by the UE of the newly detected target cell (recall that this target cell has STTD OFF): first message is thus effectively a request for the addition of the target cell in the active set. The RNC replies sending a standardized ACTIVE SET UPDATE message 202 to the UE, which in turn replies (because the UE lacks full STTD feature support) with an ACTIVE SET UPDATE FAILURE message 203 notifying "Invalid Configuration" cause to the RNC.

Due to the difference in transmit diversity mode configuration between the source and the target cell, the physical layer of the communication link with the UE must be reconfigured to deactivate STTD in (or switch off the initial status of) the source cell. Therefore, the RNC sends a PHYSICAL CHANNEL RECONFIGURATION 204 to the UE in order to configure the source cell as STTD OFF and, once completed, the UE replies with a PHYSICAL CHANNEL RECONFIGURATION ACCEPT 205. Then, second message 206 reporting one more time to the RNC the target cell addition request (in strict terms, said message 206 is a measurement report and its sending is an event trigger configured for adding the new detected cell) in the active set is sent by the UE and, in turn, the UE again receives and ACTIVE SET UPDATE message 207 from the RNC in order to add the target STTD OFF cell into the active set. The UE typically replies by sending an ACTIVE SET UPDATE ACCEPT message 208 and completing the procedure.

Figure 3 shows the active set update procedure in network scenarios wherein a call 300 is established when both the source cell in the active set and target cell to be added are configured with STTD ON while the UE lacks full STTD feature support. Thus, the call establishment is carried out with transmit diversity mode activated. The UE sends a first message 301 to the RNC to report a new target cell addition request (target cell has STTD ON) and the RNC replies to the UE with an ACTIVE SET UPDATE message 302, which in turn is replied with an ACTIVE SET UPDATE FAILURE message 303 due to "Invalid Configuration" reported from the UE to the RNC. Optionally, after this action, a direct fallback procedure may be triggered to switch off the STTD ON configuration status of the target cell instead of waiting for a further new cell addition request to avoid cell addition delays. Instead of waiting for a "measurement report" (message 301) to send the active set update (message 302) with the different STTD configuration, the fallback can enhance procedure by sending directly a new "active set update" message without waiting for new "measurement report".

After a time period (pre-configured in the UE), the UE retries the new target cell addition request by sending a second message 304 to the RNC and, this time, the RNC replies to the UE with another ACTIVE SET UPDATE message 305 but indicating that the target cell is to be configured as STTD OFF. Since the source cell keeps on STTD ON configuration, another ACTIVE SET UPDATE FAILURE message 306 due to "Invalid Configuration" is sent by the UE. The RNC responds by sending a PHYSICAL CHANNEL RECONFIGURATION 307 to the UE in order to switch off the initial status of the source cell and switch the configuration to a full STTD OFF status. Once the PHYSICAL CHANNEL RECONFIGURATION ACCEPT 308 in sent by the UE, a third message 309 is generated by the UE and sent to the RNC reporting the new target cell addition request into the active set. As both the source and target cells are STTD OFF at this point, the RNC sends an ACTIVE SET UPDATE message 310 to the UE, which replies normally sending an ACTIVE SET UPDATE ACCEPT message 311 that finishes the procedure.

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1. A method for updating an active set of cells with which a User Equipment (UE) communicates in a wide area mobile communication network, wherein each cell has a transmission diversity mode configuration, said transmission diversity mode configuration being selected from STTD activated and STTD deactivated and wherein the User Equipment (UE) is engaged in a call establishment in a source cell, the method comprising:
- in the User Equipment (UE), attempting to add a target cell to the active set,
- when the addition of the target cell to the active set fails, sending a first ACTIVE SET UPDATE FAILURE message from the User Equipment (UE) to a network controller,
**characterized in that** the method further comprises:
- at the network controller, checking whether the UE supports STTD features;
- if the UE does not support STTD features,
- determining whether the source cell has transmission diversity mode configuration with STTD activated and determining whether the target cell has transmission diversity mode configuration with STTD activated;
- setting the transmission diversity mode configuration of both source cell and target cell to STTD deactivated;
- adding the target cell to the active set.

2. The method according to claim 1, wherein, if the transmission diversity mode configuration of the source cell is determined to be STTD deactivated and transmission diversity mode configuration of the target cell is determined to be STTD activated, setting the transmission diversity mode configuration of the target cell to STTD deactivated comprises sending an ACTIVE SET UPDATE message from the network controller to the User Equipment (UE) for instructing said User Equipment (UE) to add the target cell with STTD deactivated to the active set.

3. The method according to claim 1, wherein, if the transmission diversity mode configuration of the source cell is determined to be STTD activated, setting the transmission diversity mode configuration of the source cell to STTD deactivated comprises sending a PHYSICAL CHANNEL RECONFIGURATION message from the network controller to the User Equipment (UE) for instructing said User Equipment (UE) to change the transmission diversity mode in the source cell to STTD deactivated.

4. The method according to claim 3, wherein, if the transmission diversity mode configuration of both the source cell and the target cell is determined to be STTD activated, before sending the PHYSICAL CHANNEL RECONFIGURATION message and after a configurable time period from receiving the first ACTIVE SET UPDATE FAILURE message, setting the transmission diversity mode configuration of the target cell to STTD deactivated comprises:
- sending an ACTIVE SET UPDATE message from the network controller to the User Equipment (UE) for instructing said User Equipment (UE) to add the target cell with STTD deactivated to the active set.

5. The method according to either claim 3 or 4, wherein the network controller sends the PHYSICAL CHANNEL RECONFIGURATION message after receiving a second ACTIVE SET UPDATE FAILURE message from the User Equipment (UE).

6. The method according to any previous claim, wherein, after receiving the first ACTIVE SET UPDATE FAILURE message from to the User Equipment (UE) in the network controller, at least one identifier of the User Equipment (UE) is introduced in a black list during a configurable blocking time period to inform the mobile communication network that updating the active set of the User Equipment (UE) to have at least one cell, selected from the source cell and the target cell, with STTD activated transmission diversity mode is blocked during the configurable blocking time period.

7. The method according to any previous claim, wherein attempting by the User Equipment (UE) to add the target cell to the active set comprises sending from the User Equipment (UE) to the network controller a Radio Resource Control message triggered by a measurement report on the target cell obtained by the User Equipment (UE).

8. A telecommunications network entity including processing means configured to implement the method set out in any previous claim.

9. The telecommunications network entity according to claim 8 which is selected from a Radio Network Controller (RNC), a HSPA Node B, and an eHSPA Node B.

10. A computer program product comprising program code means which, when loaded into processing means of a telecommunications network entity, makes said program code means execute the method according to any of claims 1-7.
